# EUROPÄISCHE PATENTSCHRIFT

(11) **EP 3 951 140 B1**
(45) Veröffentlichungstag und Bekanntmachung des Hinweises auf die Patenterteilung: **10.01.2024**
(21) Anmeldenummer: 21188405.1
(22) Anmeldetag: 29.07.2021
(51) Int. Cl.: F01K 9/00, F01K 23/06, F02G 5/02, F01N 5/02

(54) **VORRICHTUNG ZUR ENERGIERÜCKGEWINNUNG MIT EINEM ABWÄRMENUTZUNGSKREISLAUF**
ENERGY RECOVERY DEVICE WITH HEAT RECOVERY CIRCUIT
DISPOSITIF DE RÉCUPÉRATION D'ÉNERGIE À L'AIDE D'UN CYCLE DE RÉCUPÉRATION DE CHALEUR DISSIPÉE

(30) Priorität: 04.08.2020 AT 1722020
(43) Veröffentlichungstag der Anmeldung: 09.02.2022
(60) Teilanmeldung: 23212619.3
(73) Patentinhaber: MAN Truck & Bus SE, 80995 München (DE)
(72) Erfinder: Schydlo, Alexander, 81243 München (DE); Klammer, Josef, 4400 Steyr (AT); Robausch, Stefan, 4431 Haidershofen (AT)
(74) Vertreter: v. Bezold & Partner Patentanwälte - PartG mbB

(56) Entgegenhaltungen:
- EP-A1- 3 064 733
- WO-A1-2011/149409
- WO-A1-2016/089276
- WO-A1-2018/226141
- Tilmann Abbe Horst: "Betrieb eines rankine-prozesses zur abgaswärmenutzung im pkw", , 1. Januar 2015 (2015-01-01), XP055518930, Gefunden im Internet: URL:http://ift-bs.de/images/Dokumente/hors t_diss.pdf

## Beschreibung

Die Erfindung betrifft eine Vorrichtung zur Energierückgewinnung für ein Kraftfahrzeug.

Eine Abwärmenutzungseinrichtung zur Energierückgewinnung (engl. WHR - waste heat recovery) bei einem Kraftfahrzeug kann Verbrennungsabgase als Wärmequelle nutzen und in einem Expander in mechanische Arbeit umwandeln. In einem anschließenden Kondensator (Wärmesenke) kann ein Arbeitsmittel der Abwärmenutzungseinrichtung vollständig auskondensieren. Ein Wirkungsgrad der Abwärmenutzungseinrichtung kann von dem Temperaturpotenzial der Wärmesenke abhängig sein.

Die DE 10 2016 215 836 A1 betrifft eine Vorrichtung zur Energierückgewinnung in einem Kraftfahrzeug mit einer in einen Kühlkreislauf eingebundenen Brennkraftmaschine, wobei in dem Kühlkreislauf eine erste Kühlmittelpumpe und ein Kühler angeordnet sind. Die Vorrichtung weist ferner ein Abwärmenutzungssystem mit einem Verdampfer, einem Expander, einem Kondensator und einer Pumpe auf. Der Kühlkreislauf kann einen Hauptzweig und einen Nebenzweig aufweisen, wobei der Kondensator des Abwärmenutzungssystems in den Nebenzweig eingebunden ist. In dem Kühlkreislauf ist stromauf des Kondensators ein Latentwärmespeicher angeordnet.

Die AT 507 096 B1 offenbart eine Antriebseinheit mit Kühlkreislauf und separatem Wärmerückgewinnungskreislauf. Ein Kondensator des Wärmerückgewinnungskreislaufs ist zu seiner Kühlung in einen zweiten Teil-Kühlkreislauf stromabwärts von einem Ladelufthauptkühler und einem Ladeluftzwischenkühler integriert.

Die WO 2018/226141 A1 offenbart ein Kühlsystem mit einem ersten Kreislauf zur Kühlung eines Verbrennungsmotors und einem zweiten Kreislauf zur Kühlung eines Kondensators in einem WH R-System. Der erste Kühlkreislauf umfasst einen ersten Kühler. Der zweite Kreislauf umfasst einen zweiten Kühler. Der zweite Kreislauf umfasst ferner eine zweite Kühlerumgehungsleitung, die Kühlmittel am zweiten Kühler vorbeiführt.

Die EP 3 064 733 A1 offenbart ein Motorkühlsystem mit einem Rankine-Zyklus, wobei ein Teil des einlassseitigen Kühlwassers eines Kühlers als Heizquelle für einen ersten Verdampfer und ein Teil des auslassseitigen Kühlwassers eines Unterkühlers als Kühlquelle für einen ersten Kondensator verwendet wird.

Die WO 2016/089276 A1 offenbart ein Kühlsystem umfassend einen ersten Kühlkreislauf mit einem ersten Kühler, in dem ein zirkulierendes Kühlmittel auf eine erste Temperatur gekühlt wird. Das Kühlsystem umfasst ferner einen zweiten Kühlkreislauf mit einem zweiten Kühler, in dem ein zirkulierendes Kühlmittel auf eine zweite Temperatur gekühlt wird, die niedriger als die erste Temperatur ist. Das Kühlsystem umfasst ferner einen dritten Kühlkreislauf mit einem dritten Kühler, in dem das Kühlmittel auf eine dritte Temperatur gekühlt wird, die niedriger als die zweite Temperatur ist.

Die WO 2011/149409 A1 offenbart eine Kühleranordnung für ein Fahrzeug, das von einem aufgeladenen Verbrennungsmotor angetrieben wird. Das Fahrzeug umfasst eine Kühleranordnung, umfassend einen ersten Kühlkreislauf mit einem ersten Kühler, der zur Kühlung eines umlaufenden Kühlmittels ausgebildet ist. Die Kühleranordnung umfasst einen zweiten Kühlkreislauf mit einem zweiten Kühler, der zur Kühlung eines umlaufenden Kühlmittels auf eine niedrigere Temperatur als die Temperatur, auf die das Kühlmittel im ersten Kühler gekühlt wird, ausgebildet ist. Die Kühleranordnung umfasst einen dritten Kühlkreislauf mit einem dritten Kühler, der zur Kühlung eines umlaufenden Kühlmittels auf eine niedrigere Temperatur als die Temperatur, auf die das Kühlmittel im zweiten Kühler gekühlt wird, ausgebildet ist.

Die Nichtpatentliteratur (Tilmann Abbe Horst: "Betrieb eines Rankine-Prozesses zur Abgaswärmenutzung im PKW", Dissertation, Technische Universität Carolo-Wilhelmina, Braunschweig, 2014) offenbart ein Kühlsystemlayout bestehend aus drei Kreisläufen: einen Kurzschlusskreis, in dem das Kühlmittel nach Durchströmen des Motors eines Abgasturboladers und eines Motorkühlers direkt zu einem Thermostat fließt, einen Hochtemperaturkreislauf, der einen Hochtemperatur-Kühlmittelkühler beinhaltet und einen Niedertemperatur-Kreislauf mit einem Niedertemperatur-Kühlmittelkühler.

Der Erfindung liegt die Aufgabe zu Grunde, eine alternative und/oder verbesserte Vorrichtung zur Energierückgewinnung zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Ein Aspekt der vorliegenden Erfindung betrifft eine Vorrichtung zur Energierückgewinnung für ein Kraftfahrzeug. Die Vorrichtung weist eine Abwärmequelle und einen Abwärmenutzungskreislauf, vorzugsweise einen Clausius-Rankine-Abwärmenutzungskreislauf, der zum Umwandeln von Abwärme der Abwärmequelle zu mechanischer Arbeit ausgebildet ist, auf. Die Vorrichtung weist einen Kühlkreislauf auf, der eine Kühlmittelpumpe und einen ersten Kühler aufweist und in dem eine zu kühlende Komponente, vorzugsweise eine Antriebseinrichtung (z. B. Brennkraftmaschine und/oder AGR-Kühler und/oder Brennstoffzelle und/oder Traktionsbatterie und/oder Elektromotor und/oder Leistungselektronik), eingebunden ist. Die Vorrichtung weist einen Kühlabschnitt-Nebenzweig, der von dem Kühlkreislauf abzweigt, wobei der Kühlabschnitt-Nebenzweig einen zweiten Kühler und direkt stromabwärts des zweiten Kühlers einen Wärmeübertrager, der wärmeübertragend mit einem Arbeitsmittel des Abwärmenutzungskreislaufs zum Kühlen des Arbeitsmittels verbunden ist, auf.

Vorteilhaft ermöglicht die Vorrichtung den Wirkungsgrad des Abwärmenutzungskreislaufs durch eine signifikante Temperaturverringerung der Wärmesenke (z. B. Kondensator) am Wärmeübertrager zu erhöhen. Durch die Erhöhung des Wirkungsgrads des Abwärmenutzungskreislaufs kann ein Gesamtwirkungsgrad des Antriebsstrangs des Kraftfahrzeugs erhöht werden. Die Vorrichtung erreicht ein besonders tiefes Temperaturniveau an der Wärmesenke, da extra ein zweiter Kühler umfasst ist und der Wärmeübertrager direkt stromabwärts des zweiten Kühlers angeordnet ist.

Bevorzugt ist im Kühlabschnitt-Nebenzweig kein weiterer Wärmeübertrager stromabwärts des zweiten Kühlers und stromaufwärts des Wärmeübertragers angeordnet.

Vorzugsweise sind der zweite Kühler und der Wärmeübertrager die einzigen Wärmetauscher des Kühlabschnitt-Nebenzweigs.

Insbesondere kann vom Kühlkreislauf ein Teilstrom in den Kühlabschnitt-Nebenzweig abgezweigt werden. Der abgezweigte Teilstrom kann in dem zweiten Kühler abgekühlt werden. Der abgekühlte abgezweigte Teilstrom kann mittels des Wärmeübertragers das Arbeitsmittel des Abwärmenutzungskreislaufs direkt abkühlen, vorzugsweise zum Kondensieren des Arbeitsmittels.

Zweckmäßig ist der zweite Kühler nur zum Kühlen ausgebildet, d.h. beispielsweise nicht als Latentwärmespeicher ausgeführt.

In einem Ausführungsbeispiel ist der erste Kühler und/oder zweite Kühler luftgekühlt, vorzugsweise umgebungsluftgekühlt, fahrtwindgekühlt und/oder lüftergekühlt.

In einem weiteren Ausführungsbeispiel sind der erste Kühler und der zweiten Kühler aneinander angrenzend angeordnet. Dies kann bspw. eine gemeinsame Luftkühlung des ersten und zweiten Kühlers ermöglichen und/oder aus Bauraumgründen sinnvoll sein.

Erfindungsgemäß sind der erste Kühler und der zweite Kühler durch eine Trennwand hydraulisch und thermisch voneinander getrennt. Die Trennwand kann eine direkt aneinander angrenzende Anordnung der Kühler ermöglichen, z. B. in einem gemeinsamen Kühlmodul oder einem gemeinsamen Kühlerkasten. Dies kann wiederum bspw. eine gemeinsame Luftkühlung des ersten und zweiten Kühlers ermöglichen und/oder aus Bauraumgründen sinnvoll sein.

In einem weiteren Ausführungsbeispiel sind der erste Kühler und der zweite Kühler baulich im selben Kühlmodul umfasst.

Der erste Kühler und der zweite Kühler sind erfindungsgemäß in einem gemeinsamen Kühlerkasten aufgenommen. Damit können bspw. auch kurze Leitungswege zwischen dem ersten Kühler und dem zweiten Kühler ermöglicht werden. Zudem kann wiederum bspw. eine gemeinsame Luftkühlung des ersten und zweiten Kühlers ermöglicht werden und/oder dies aus Bauraumgründen sinnvoll sein.

In einer Ausführungsvariante ist der erste Kühler ein Hochtemperatur-Kühler, der vorzugsweise dazu ausgebildet ist (bzw. betrieben wird), im Normalbetrieb ein Kühlmittel von rund 110°C auf rund 100°C abzukühlen.

In einer weiteren Ausführungsvariante ist der zweite Kühler ein Niedrigtemperatur-Kühler, der vorzugsweise dazu ausgebildet ist, im Normalbetrieb ein Kühlmittel bis auf einen Temperaturbereich zwischen 5 K und 50 K, bevorzugt bis 25 K, oberhalb von einer Umgebungstemperatur des zweiten Kühlers abzukühlen (bzw. derart betrieben zu werden). Der zweite Kühler kann damit das Kühlmittel des Teilstroms deutlich unterhalb einer Temperatur am Austritt des ersten Kühlers abkühlen, sodass die Temperatur der Wärmesenke des Abwärmenutzungskreislaufs vorteilhaft besonders niedrig sein kann.

In einer Ausführungsform zweigt der Kühlabschnitt-Nebenzweig vom Kühlkreislauf (z. B. direkt) stromabwärts von der Kühlmittelpumpe und/oder (z. B. direkt) stromaufwärts von der zu kühlenden Komponente ab. Alternativ kann der Kühlabschnitt-Nebenzweig bspw. im ersten Kühler oder in einem (z. B. gemeinsamen) Kühlerkasten des ersten Kühlers, und vorzugsweise des zweiten Kühlers, vom Kühlkreislauf abzweigen.

In einer weiteren Ausführungsform weist der Kühlabschnitt-Nebenzweig einen, vorzugsweise verschließbaren, Bypass am ersten Kühler oder in einem (z. B. gemeinsamen) Kühlerkasten des ersten Kühlers und/oder des zweiten Kühlers auf. Vorzugsweise kann der Bypass den ersten Kühler direkt mit dem zweiten Kühler verbinden. Der Bypass kann bspw. intern oder extern des Kühlerkastens geführt sein.

In einer weiteren Ausführungsform mündet der Kühlabschnitt-Nebenzweig in den Kühlkreislauf, vorzugsweise direkt stromabwärts von dem ersten Kühler und/oder direkt stromaufwärts von der Kühlmittelpumpe.

In einem Ausführungsbeispiel sind der Kühlabschnitt-Nebenzweig und der Abwärmenutzungskreislauf hydraulisch getrennt voneinander, und/oder das Arbeitsmittel des Abwärmenutzungskreislaufs wird z. B. indirekt über den Wärmeübertrager vom Kühlmittel gekühlt, das bspw. den ersten Kühler und den zweiten Kühler durchströmt hat.

In einem weiteren Ausführungsbeispiel weist der Kühlabschnitt-Nebenzweig eine Durchflussbegrenzungseinrichtung zum Begrenzen und/oder Anpassen eines Teilstroms durch den Kühlabschnitt-Nebenzweig auf.

In einer Weiterbildung weist die Durchflussbegrenzungseinrichtung eine Blende und/oder eine Ventileinrichtung, vorzugsweise aufweisend ein Druckbegrenzungsventil, ein Steuerventil, ein Regelventil und/oder ein Absperrventil, auf.

In einer Weiterbildung ist die Durchflussbegrenzungseinrichtung in einer Leitung des Kühlabschnitt-Nebenzweigs angeordnet, oder die Durchflussbegrenzungseinrichtung ist in einem (z. B. gemeinsamen) Kühlerkasten des ersten Kühlers und/oder des zweiten Kühlers angeordnet, oder die Durchflussbegrenzungseinrichtung ist in einem Bypass, der den ersten Kühler (z. B. direkt) mit dem zweiten Kühler verbindet, angeordnet.

In einer Ausführungsform weist der Kühlabschnitt-Nebenzweig ferner eine weitere Kühlmittelpumpe auf, die vorzugsweise unabhängig von der Kühlmittelpumpe des Kühlkreislaufs steuerbar ist (z. B. zum Halten einer gleichgroßen Durchflussmenge von Kühlmittel durch den Kühlabschnitt-Nebenzweig).

In einer weiteren Ausführungsform weist der Abwärmenutzungskreislauf einen Kondensator, eine Arbeitsmittelpumpe, einen Verdampfer und/oder eine Expansionsmaschine auf.

In einer weiteren Ausführungsform ist die Abwärmequelle eine Brennstoffzellen und/oder eine Brennkraftmaschine.

Ein weiterer Aspekt der vorliegenden Offenbarung betrifft ein Kraftfahrzeug, vorzugsweise ein Nutzfahrzeug (z. B. Lastkraftwagen oder Omnibus), aufweisend die Vorrichtung zur Energierückgewinnung wie hierin offenbart. Vorzugsweise können der erste Kühler und der zweite Kühler in einem Frontende des Kraftfahrzeugs angeordnet sein, und/oder der erste Kühler und der zweite Kühler sind bezüglich einer Querachse des Kraftfahrzeugs, vorzugsweise direkt, nebeneinander angeordnet.

Die Integration im Frontende und die Anordnung nebeneinander bezüglich der Querachse kann aus Bauraumgründen besonders vorteilhaft sein.

Es ist auch möglich, die Vorrichtung wie hierin offenbart für Personenkraftwagen, Großmotoren, geländegängige Fahrzeuge, stationäre Anlagen oder Motoren, Marinemotoren usw. zu verwenden.

Gemäß einem weiteren Aspekt der vorliegenden Offenbarung ist eine Vorrichtung zum Kühlen offenbart. Die Vorrichtung weist einen ersten Kühler und einen zweiten Kühler, die aneinander angrenzend angeordnet sind, auf.

Die Vorrichtung kann bspw. für eine Abwärmenutzungssystem wie hierin offenbart verwendet werden. Es ist allerdings auch möglich, die Vorrichtung anders zu verwenden, z. B. zum Kühlen von unterschiedlichen Komponenten eines Kraftfahrzeugs (z. B. Nutzfahrzeugs), vorzugsweise eines Elektro-Kraftfahrzeugs, eines Hybrid-Kraftfahrzeugs oder eines Verbrenner-Kraftfahrzeugs.

Es ist möglich, dass der erste Kühler in einem ersten Kühlkreislauf integriert ist und/oder der zweite Kühler in einem zweiten Kühlkreislauf integriert ist. Es ist auch möglich, dass der zweite Kühler in einem Nebenzweig eines Kühlkreislaufes des ersten Kühlers integriert ist.

Vorzugsweise können der erste Kühler und der zweite Kühler durch eine Trennwand hydraulisch und/oder thermisch voneinander getrennt sein.

Bevorzugt können der erste Kühler und der zweite Kühler baulich im selben Kühlmodul umfasst sein.

Beispielsweise können der erste Kühler und der zweite Kühler in einem gemeinsamen Kühlerkasten aufgenommen sein.

Es ist möglich, dass der erste Kühler und/oder zweite Kühler luftgekühlt ist, vorzugsweise umgebungsluftgekühlt, fahrtwindgekühlt und/oder lüftergekühlt.

Vorzugsweise können der erste Kühler und der zweite Kühler auf unterschiedlichen oder gleichen Temperaturniveaus betrieben werden.

Beispielsweise kann der erste Kühler und/oder der zweite Kühler ein Hochtemperatur, Mitteltemperatur- oder ein Niedrigtemperatur-Kühler sein.

Es ist möglich, dass ein Kühlabschnitt-Nebenzweig eines Kühlkreislaufes im ersten Kühler oder in einem Kühlerkasten des ersten Kühlers, und vorzugsweise des zweiten Kühlers, vorzugsweise zu dem zweiten Kühler abzweigt.

In einer Weiterbildung kann der Kühlabschnitt-Nebenzweig einen, vorzugsweise verschließbaren, Bypass am ersten Kühler oder in einem Kühlerkasten des ersten Kühlers und/oder des zweiten Kühlers aufweisen, wobei vorzugsweise der Bypass den ersten Kühler direkt mit dem zweiten Kühler verbindet.

Es ist auch möglich, dass der Kühlabschnitt-Nebenzweig eine Durchflussbegrenzungseinrichtung zum Begrenzen und/oder Anpassen eines Teilstroms durch den Kühlabschnitt-Nebenzweig aufweist.

Bevorzugt kann die Durchflussbegrenzungseinrichtung eine Blende und/oder eine Ventileinrichtung, vorzugsweise aufweisend ein Druckbegrenzungsventil, ein Steuerventil, ein Regelventil und/oder ein Absperrventil, aufweisen.

Beispielsweise kann die Durchflussbegrenzungseinrichtung in einem Kühlerkasten des ersten Kühlers und/oder des zweiten Kühlers angeordnet sein. Alternativ kann die Durchflussbegrenzungseinrichtung bspw. in einem Bypass, der den ersten Kühler direkt mit dem zweiten Kühler verbindet, angeordnet sein.

Vorzugsweise können der erste Kühler und der zweite Kühler in einem Frontende eines Kraftfahrzeugs (z. B. Nutzfahrzeugs) angeordnet sein und/oder bezüglich einer Querachse eines Kraftfahrzeugs (z. B. Nutzfahrzeugs), bevorzugt direkt, nebeneinander angeordnet sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht einer Vorrichtung zur Energierückgewinnung für ein Kraftfahrzeug gemäß einem Ausführungsbeispiel der vorliegenden Offenbarung;
- Figur 2: eine schematische Vorderansicht einer Kühlereinrichtung der beispielhaften Vorrichtung nach Figur 1;
- Figur 3: eine schematische Ansicht einer Vorrichtung zur Energierückgewinnung für ein Kraftfahrzeug gemäß einem weiteren Ausführungsbeispiel der vorliegenden Offenbarung;
- Figur 4: eine schematische Vorderansicht einer Kühlereinrichtung der beispielhaften Vorrichtung nach Figur 3;
- Figur 5: eine schematische Ansicht einer Vorrichtung zur Energierückgewinnung für ein Kraftfahrzeug gemäß einem weiteren anderen Ausführungsbeispiel der vorliegenden Offenbarung; und
- Figur 6: eine schematische Vorderansicht einer Kühlereinrichtung der beispielhaften Vorrichtung nach Figur 5.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

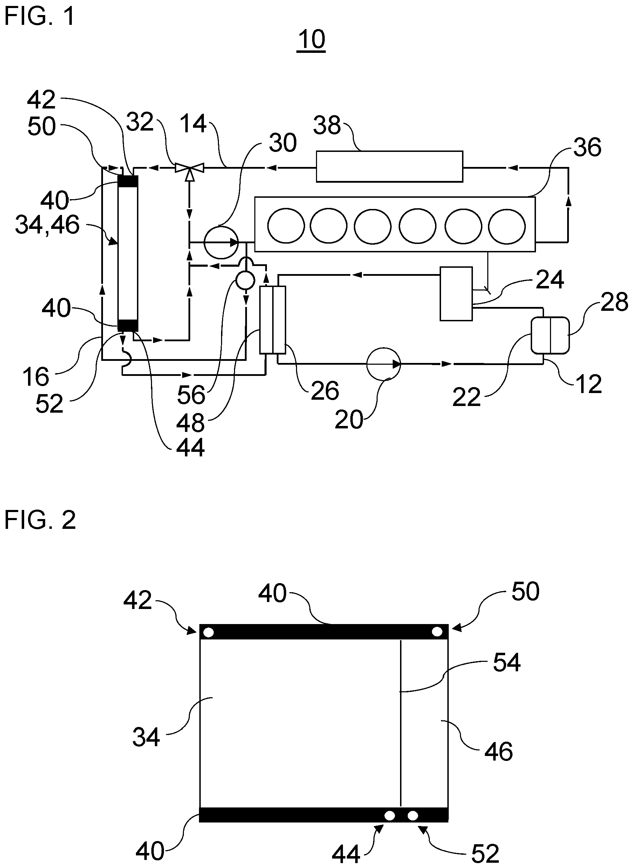

Unter Bezugnahme auf die Figuren 1 und 2 ist ein erstes Ausführungsbeispiel gezeigt. Die Figur 1 zeigt eine Vorrichtung 10 zur Energierückgewinnung für ein Kraftfahrzeug. Das Kraftfahrzeug kann vorzugsweise ein Nutzfahrzeug, insbesondere ein Lastkraftwagen oder ein Omnibus, sein. Die Figur 2 zeigt einen ersten Kühler 34 und einen zweiten Kühler 46 der Vorrichtung 10.

Die Vorrichtung 10 weist einen Abwärmenutzungskreislauf 12, einen Kühlkreislauf 14 und einen Kühlabschnitt-Nebenzweig 16 auf. Bevorzugt kann der Abwärmenutzungskreislauf 12 als eine Clausius-Rankine-Abwärmenutzungskreislauf (z. B. als rechtsläufiger Nassdampf-Kreisprozess) ausgeführt sein, wie hierin beschrieben ist. Es ist allerdings auch möglich, dass der Abwärmenutzungskreislauf 12 auf eine andere Art und Weise ausgebildet ist, nämlich zum Beispiel als ein Joule-Brayton-Abwärmenutzungskreislauf.

Der Abwärmenutzungskreislauf 12 ist dazu ausgebildet, Abwärme einer Abwärmequelle 28 in mechanische Arbeit umzuwandeln. In dem Abwärmenutzungskreislauf 12 sind eine Arbeitsmittelpumpe 20, ein Verdampfer 22, eine Expansionsmaschine 24 und ein Kondensator 26 angeordnet. In dem Abwärmenutzungskreislauf 12 zirkuliert ein Arbeitsmittel. Das Arbeitsmittel durchströmt nacheinander die Arbeitsmittelpumpe 20, den Verdampfer 22, die Expansionsmaschine 24 und den Kondensator 26.

Die Arbeitsmittelpumpe 20 fördert das Arbeitsmittel des Abwärmenutzungskreislaufs 12 durch den Abwärmenutzungskreislauf 12. Bevorzugt ist die Arbeitsmittelpumpe 20 direkt stromabwärts des Kondensators 26 und/oder direkt stromaufwärts von dem Verdampfer 22 angeordnet.

Der Verdampfer 22 verdampft das Arbeitsmittel. Der Verdampfer 22 ist thermisch mit einer Abwärmequelle 28 zum Übertragen der Abwärme der Abwärmequelle 28 auf das Arbeitsmittel verbunden. Die Abwärmequelle 28 kann beispielsweise eine Abgas-Abwärmequelle sein, zum Beispiel eine Verbrennungsabgas-Abwärmequelle oder eine Brennstoffzellenabgas-Abwärmequelle. Bevorzugt ist der Verdampfer 22 direkt stromabwärts der Arbeitsmittelpumpe 20 und/oder direkt stromaufwärts der Expansionsmaschine 24 angeordnet.

In der Expansionsmaschine 24 wird das verdampfte Arbeitsmittel entspannt. Das sich entspannende Arbeitsmittel treibt die Expansionsmaschine 24 zum Ausgeben einer mechanischen Arbeit an. Beispielsweise kann das Arbeitsmittel zum Antreiben eines Turbinenrads oder eines Kolbens der Expansionsmaschine 24 entspannt werden. Die durch die Expansionsmaschine 24 ausgegebene mechanische Arbeit kann beispielsweise zum Antreiben eines Antriebsstrangs des Kraftfahrzeugs genutzt werden und/oder von einem Generator (nicht dargestellt) in elektrische Energie umgewandelt werden. Bevorzugt ist die Expansionsmaschine 24 direkt stromabwärts von dem Verdampfer 22 und/oder direkt stromaufwärts von dem Kondensator 26 angeordnet.

Der Kondensator 26 kondensiert das Arbeitsmittel im Wesentlichen vollständig. Das Arbeitsmittel kann somit wieder von der Arbeitsmittelpumpe 20 angesaugt und zu dem Verdampfer 22 gefördert werden. Bevorzugt ist der Kondensator 26 direkt stromabwärts von der Expansionsmaschine 24 und/oder direkt stromaufwärts von der Arbeitsmittelpumpe 20 angeordnet.

Der Kühlkreislauf 14 weist eine Kühlmittelpumpe 30, ein Thermostat 32 und einen ersten Kühler 34 auf. Im Kühlkreislauf 14 ist ferner mindestens eine zu kühlende Komponente 36, 38 eingebunden. Die zu kühlende Komponente 36 kann beispielsweise eine Brennkraftmaschine (zum Beispiel mit Zylinderkopf und Motorblock) sein. Die zu kühlende Komponente 38 kann beispielsweise ein Abgaskühler einer Abgasrückführleitung (AGR-Leitung) sein. Es ist allerdings auch möglich, dass die mindestens eine zu kühlende Komponente 36, 38 anders ausgeführt ist, zum Beispiel als eine Brennstoffzelle.

Die Kühlmittelpumpe 30 fördert ein Kühlmittel durch den Kühlkreislauf 14. Bevorzugt ist die Kühlmittelpumpe 30 direkt stromaufwärts der zu kühlenden Komponente 36 angeordnet.

Das Thermostat 32 ist, vorzugsweise direkt, stromabwärts der zu kühlenden Komponenten 36, 38 angeordnet. Das Thermostat 32 kann in Abhängigkeit von einer Temperatur des Kühlmittels das Kühlmittel zu dem ersten Kühler 34 oder zu der Kühlmittelpumpe 30 leiten. Unterschreitet eine Temperatur des Kühlmittels beispielsweise eine vorbestimmte Temperatur, wird das Kühlmittel von den Thermostat 32 zu der Kühlmittelpumpe 30 geleitet. Dies kann beispielsweise bei einem Kaltstart der als Brennkraftmaschine ausgeführten Komponente 36 vorteilhaft sein. Überschreitet eine Temperatur des Kühlmittels beispielsweise eine vorbestimmte Temperatur, wird das Kühlmittel von den Thermostat 32 zu dem ersten Kühler 34 geleitet. Dies kann beispielsweise bei einem Normalbetrieb der als Brennkraftmaschine ausgeführten Komponente 36 vorteilhaft sein.

Im ersten Kühler 34 wird das vom Thermostat 32 stammende Kühlmittel abgekühlt. Bevorzugt ist der ersten Kühler 34 ein Hochtemperatur-Kühler. Der Hochtemperatur-Kühler kühlt das Kühlmittel im Normalbetrieb beispielsweise von ca. 110 °C auf ca. 100 °C ab. Der Temperaturbereich, in dem der Hochtemperatur-Kühler arbeitet, kann von der Ausführung der zu kühlenden Komponenten 36, 38 abhängen.

Der erste Kühler 34 kann in einer Fahrzeugfront des Kraftfahrzeugs angeordnet sein. Der erste Kühler 34 kann durch Fahrtwind beim Fahren des Kraftfahrzeugs gekühlt werden. Es ist auch möglich, dass ein zusätzlicher, vorzugsweise elektrischer, Lüfter (nicht dargestellt) zum Kühlen des ersten Kühlers 34 vorgesehen ist.

Der erste Kühler 34 kann in einem Kühlerkasten 40 aufgenommen sein bzw. von einem Kühlerkasten 40 getragen sein. Der Kühlerkasten 40 kann an einer Karosserie und/oder einem Rahmen des Kraftfahrzeugs getragen sein. Der Kühlerkasten 40 kann einen ersten Kühlmitteleinlass 42 aufweisen, der mit einem Kühlmitteleinlass des ersten Kühlers 34 verbunden ist. Der Kühlerkasten 40 kann einen ersten Kühlmittelauslass 44 aufweisen, der mit einem Kühlmittelauslass des ersten Kühlers 40 verbunden ist. Der Kühlerkasten 40 kann einteilig oder mehrteilig ausgeführt sein. Der Kühlerkasten 40 kann den ersten Kühler 34 rahmenförmig umgeben.

Der Kühlabschnitt-Nebenzweig 16 weist einen zweiten Kühler 46 und einen Wärmeübertrager 48 auf. Der Kühlabschnitt-Nebenzweig 16 zweigt vom Kühlkreislauf 14 ab und mündet in den Kühlkreislauf 14.

Der Kühlabschnitt-Nebenzweig 16 dient dazu, einen Teilstrom aus dem Kühlkreislauf 14 abzuzweigen. Am Ende des Kühlabschnitt-Nebenzweigs 16 wird der Teilstrom wieder dem Kühlkreislauf 14 zugeführt. Bevorzugt wird der Teilstrom an einer Stelle abgezweigt, die stromaufwärts der zu kühlenden Komponenten 36, 38 liegt, z. B. direkt stromabwärts der Kühlmittelpumpe 30 und direkt stromaufwärts der zu kühlenden Komponente 36. Der Teilstrom wurde somit bereits von dem ersten Kühler 34 abgekühlt. Bevorzugt wird der Teilstrom an einer Stelle abgezweigt, die, vorzugsweise direkt, stromabwärts der Kühlmittelpumpe 30 angeordnet ist. Ein Druck am Eingang des zweiten Kühlers 46 kann somit nahe eines Maximaldrucks des Kühlmittels in der Vorrichtung 10 sein.

Im zweiten Kühler 46 wird der abgezweigte Teilstrom abgekühlt. Bevorzugt ist der zweite Kühler 46 ein Niedertemperatur-Kühler. Der Niedertemperatur-Kühler kühlt den Teilstrom des Kühlmittels im Normalbetrieb beispielsweise bis auf einen Temperaturbereich zwischen 5 K und 50 K, bevorzugt bis 25 K, oberhalb von einer Umgebungstemperatur des Kraftfahrzeugs bzw. des zweiten Kühlers 46 ab. Der Teilstrom kann somit deutlich unter einer Temperatur des Kühlmittels am Ausgang des ersten Kühlers 34 abgekühlt werden.

Der zweite Kühler 46 kann in einer Fahrzeugfront des Kraftfahrzeugs angeordnet sein. Der zweite Kühler 46 kann durch Fahrtwind beim Fahren des Kraftfahrzeugs gekühlt werden. Es ist auch möglich, dass ein zusätzlicher, vorzugsweise elektrischer, Lüfter (nicht dargestellt) zum Kühlen des zweiten Kühlers 46 vorgesehen ist.

Der erste Kühler 34 und der zweite Kühler 36 können baulich im selben Kühlmodul bzw. derselben Kühleinrichtung umfasst sein. Der erste Kühler 34 und der zweite Kühler 46 können zweckmäßig separate Passagen in dem Kühlmodul sein, die unterschiedliche Einlässe und Auslässe aufweisen. Der zweite Kühler 46 kann in demselben Kühlerkasten 40 aufgenommen bzw. getragen sein wie der erste Kühler 34. Der Kühlerkasten 40 kann den ersten Kühler 34 und den zweiten Kühler 46 rahmenförmig umgeben. Der Kühlerkasten 40 kann einen zweiten Kühlmitteleinlass 50 aufweisen, der mit einem Kühlmitteleinlass des zweiten Kühlers 46 verbunden ist. Der Kühlerkasten 40 kann einen zweiten Kühlmittelauslass 52 aufweisen, der mit einem Kühlmittelauslass des zweiten Kühlers 46 verbunden ist.

Der erste Kühler 34 und der zweite Kühler 46 können direkt nebeneinander bzw. aneinander angrenzend angeordnet sein. Der erste Kühler 34 und der zweite Kühler 46 können bezüglich einer Querachse des Kraftfahrzeugs nebeneinander angeordnet sein. Eine Trennwand 54 kann den ersten Kühler 34 und den zweiten Kühler 46 voneinander trennen, vorzugsweise hydraulisch und/oder thermisch. Die Trennwand 54 kann vertikal ausgerichtet sein. Der erste Kühler 34 und der zweite Kühler 46 können bspw. gleich hoch und/oder unterschiedlich breit ausgeführt sein. Bevorzugt kann der erste Kühler 34 breiter als der zweite Kühler 46 sein.

Der vom zweiten Kühler 46 abgekühlte Kühlmittel-Teilstrom wird direkt zu dem Wärmeübertrager 48 geleitet. Der vom zweiten Kühler 46 gekühlte Teilstrom wird somit vor Erreichen des Wärmeübertragers 48 nicht durch einen anderen Wärmeübertrager o. Ä. aufgewärmt. Der gekühlte Teilstrom erreicht den Wärmeübertrager 48 mit einem Temperaturniveau, das der gekühlte Teilstrom im Wesentlichen bereits beim Verlassen des zweiten Kühlers 46 hatte.

Der Wärmeübertrager 48 ist mit dem (indirekten) Kondensator 26 thermisch gekoppelt. Der Wärmeübertrager 48 ist hydraulisch von dem Kondensator 26 entkoppelt. Der Wärmeübertrager 48 kühlt den Kondensator 26 bzw. überträgt die Abwärme des im Kondensator 26 kondensierenden Arbeitsmittels des Abwärmenutzungskreislaufs 12 auf den Kühlmittel-Teilstrom. Der Wärmeübertrager 48 und der Kondensator 26 bilden vorzugsweise eine bauliche Einheit.

Nach dem Durchströmen des Wärmeübertragers 48 wird der Kühlmittel-Teilstrom wieder zu dem Kühlkreislauf 14 zugeführt, z. B. direkt stromaufwärts der Kühlmittelpumpe 30, und mit dem Kühlmittel-Hauptstrom gemischt.

Es ist möglich, dass der Kühlabschnitt-Nebenzweig 16 eine Durchflussbegrenzungseinrichtung 56 aufweist. Die Durchflussbegrenzungseinrichtung 56 kann einen Volumenstrom bzw.

Massenstrom des Kühlmittelteilstroms durch den Kühlabschnitt-Nebenzweig 16 begrenzen, vorzugsweise einstellen. Die Durchflussbegrenzungseinrichtung 56 kann bspw. eine Blende und/oder eine Ventileinrichtung aufweisen. Die Ventileinrichtung (z. B. in Form eines Klappenventils) kann ein Druckbegrenzungsventil, ein Steuerventil, ein Regelventil und/oder ein Absperrventil aufweisen. Die Durchflussbegrenzungseinrichtung 56 kann in einer Leitung des Kühlabschnitt-Nebenzweigs 16 angeordnet sein. Es ist allerdings auch möglich, die Durchflussbegrenzungseinrichtung 56 bspw. in den Kühlerkasten 40 zu integrieren.

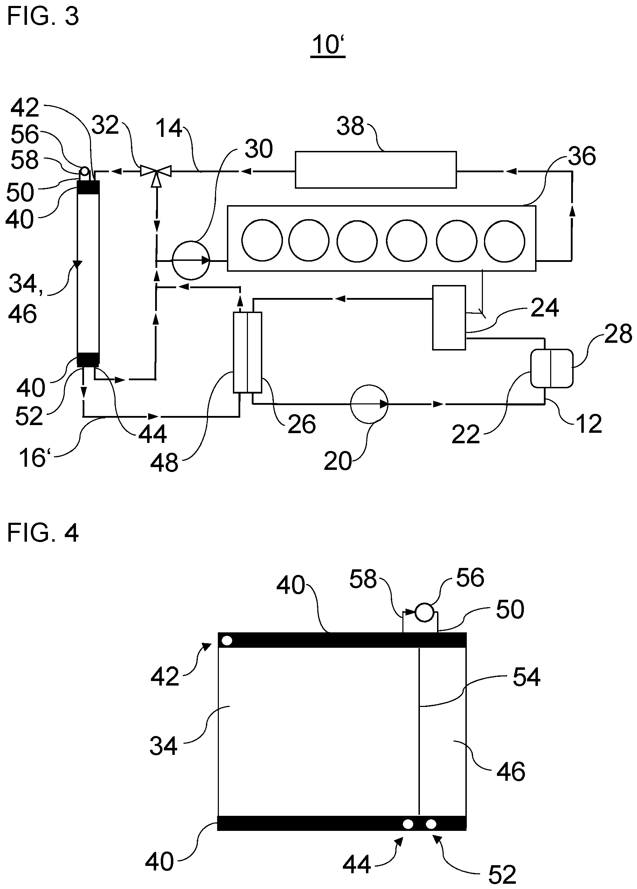

Die Figuren 3 und 4 zeigen ein modifiziertes Ausführungsbeispiel mit verändertem Kühlabschnitt-Nebenzweig 16`.

Der Kühlabschnitt-Nebenzweig 16' zweigt im Kühlerkasten 40 von dem Kühlkreislauf 14 ab. Hierzu kann der Kühlerkasten 40 einen Bypass 58 aufweisen. Der Bypass 58 kann intern oder extern von dem Kühlerkasten 40 verlaufen. Der Bypass 58 kann die Durchflussbegrenzungseinrichtung 56 aufweisen. Der Bypass 58 kann einen Kanalabschnitt des Kühlerkastens 40 stromaufwärts oder bevorzugt stromabwärts des ersten Kühlers 34 mit dem zweiten Kühlmitteleinlass 50, der zu dem zweiten Kühler 46 führt, verbinden.

Es ist auch möglich, dass der Bypass 58 bspw. direkt den ersten Kühler 34 und den zweiten Kühler 46 miteinander verbindet, d. h. beispielsweise aus einem Abschnitt der ersten Kühlers 34 abzweigt, der stromabwärts eines einlassseitigen Bereichs des Kühlerkastens 40 und stromaufwärts eines auslassseitigen Bereichs des Kühlerkastens 40 liegen kann.

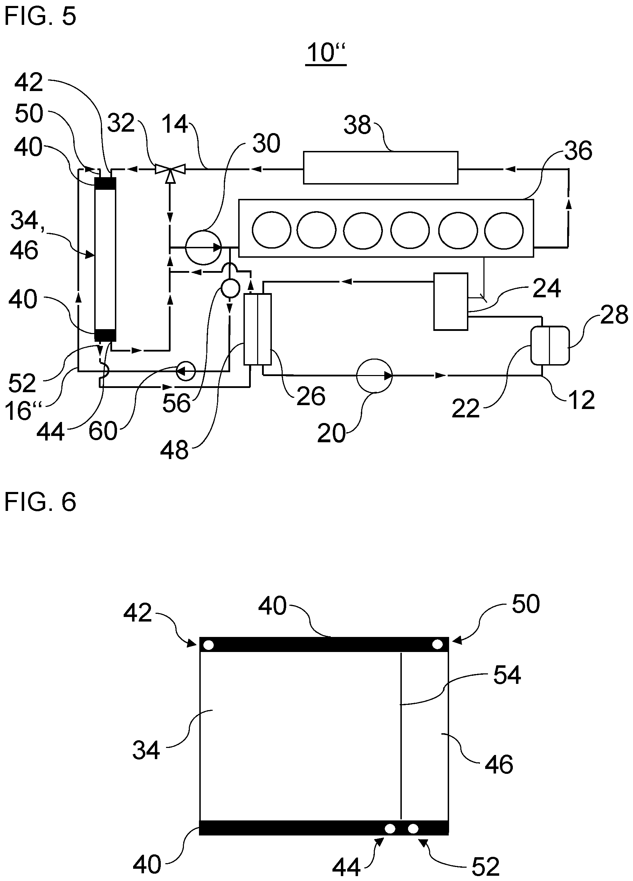

Die Figuren 5 und 6 zeigen ein weiteres modifiziertes Ausführungsbeispiel mit verändertem Kühlabschnitt-Nebenzweig 16".

Der Kühlabschnitt-Nebenzweig 16" weist eine weitere Kühlmittelpumpe 60 auf. Die weitere Kühlmittelpumpe 60 ermöglicht, dass der durch den Kühlabschnitt-Nebenzweig 16" geführte Teilstrom durch die weitere Kühlmittelpumpe 60 unabhängig von einer Drehzahl der Kühlmittelpumpe 30 eingestellt werden kann. Die weitere Kühlmittelpumpe 60 kann vorzugsweise unabhängig von der Drehzahl der Kühlmittelpumpe 30 den Kühlmittelteilstrom durch den Kühlabschnitt-Nebenzweig 16" konstant halten. Die weitere Kühlmittelpumpe 60 kann auch bspw. als eine Booster-Kühlmittelpumpe verwendet werden. Die weitere Kühlmittelpumpe 60 ist bevorzugt elektrisch angetrieben. Die weitere Kühlmittelpumpe 60 kann bevorzugt stromabwärts der Abzweigungsstelle vom Kühlkreislauf 14 und/oder stromaufwärts von dem zweiten Kühler 46 angeordnet sein.

Es ist auch möglich, die weitere Kühlmittelpumpe 60 in der Ausführungsvariante gemäß den Figuren 3 und 4 zu integrieren, z. B. stromabwärts des zweiten Kühlers 46 und/oder stromaufwärts des Wärmeübertragers 48.

Es wird explizit darauf hingewiesen, dass die Vorrichtungen zum Kühlen, die in den Figuren 2, 4 und 6 gezeigt sind, hierin unabhängig von den Vorrichtungen zur Energierückgewinnung gemäß der Figuren 1, 3 und 5 offenbart sind. D. h. dass die Vorrichtungen zum Kühlen auch in anderen Kühlkreisläufen zum Kühlen alternativer oder weiterer Komponenten einsetzbar sind. Bspw. könnte der erste Kühler zum Kühlen einer Traktionsbatterie verwendet werden und der zweite Kühler zum Kühlen einer anderen Komponente eines Kraftfahrzeugs (z. B. Klimakreislauf, Antriebseinheit und/oder Leistungselektronik usw.).

### Bezugszeichenliste

- 10: Vorrichtung zur Energierückgewinnung
- 12: Abwärmenutzungskreislauf
- 14: Kühlkreislauf
- 16: Kühlabschnitt-Nebenzweig
- 20: Arbeitsmittelpumpe
- 22: Verdampfer
- 24: Expansionsmaschine
- 26: Kondensator
- 28: Abwärmequelle
- 30: Kühlmittelpumpe
- 32: Thermostat
- 34: Erster Kühler
- 36: Zu kühlende Komponente
- 38: Zu kühlende Komponente
- 40: Kühlerkasten
- 42: Erster Kühlmitteleinlass
- 44: Erster Kühlmittelauslass
- 46: Zweiter Kühler
- 48: Wärmeübertrager
- 50: Zweiter Kühlmitteleinlass
- 52: Zweiter Kühlmittelauslass
- 54: Trennwand
- 56: Durchflussbegrenzungseinrichtung
- 58: Bypass
- 60: Weitere Kühlmittelpumpe

## Patentansprüche

1. Vorrichtung (10) zur Energierückgewinnung für ein Kraftfahrzeug, aufweisend:
eine Abwärmequelle (28);
einen Abwärmenutzungskreislauf (12), vorzugsweise einen Clausius-Rankine-Abwärmenutzungskreislauf, wobei der Abwärmenutzungskreislauf (12) zum Umwandeln von Abwärme der Abwärmequelle (28) zu mechanischer Arbeit ausgebildet ist;
einen Kühlkreislauf (14), der eine Kühlmittelpumpe (30) und einen ersten Kühler (34) aufweist und in dem eine zu kühlende Komponente (36, 38), vorzugsweise eine Antriebseinrichtung, eingebunden ist; und
einen Kühlabschnitt-Nebenzweig (16), der von dem Kühlkreislauf (14) abzweigt, wobei der Kühlabschnitt-Nebenzweig (16) einen zweiten Kühler (46) und direkt stromabwärts des zweiten Kühlers (46) einen Wärmeübertrager (48), der wärmeübertragend mit einem Arbeitsmittel des Abwärmenutzungskreislaufs (12) zum Kühlen des Arbeitsmittels verbunden ist, aufweist, **dadurch gekennzeichnet, dass**
der erste Kühler (34) und der zweite Kühler (46) durch eine Trennwand (54) hydraulisch und thermisch voneinander getrennt sind; und
der erste Kühler (34) und der zweite Kühler (46) in einem gemeinsamen Kühlerkasten (40) aufgenommen sind.

2. Vorrichtung (10) nach Anspruch 1, wobei:
der erste Kühler (34) und/oder zweite Kühler (46) luftgekühlt ist, vorzugsweise umgebungsluftgekühlt, fahrtwindgekühlt und/oder lüftergekühlt.

3. Vorrichtung (10) nach Anspruch 1 oder Anspruch 2, wobei:
der erste Kühler (34) und der zweiten Kühler (46) aneinander angrenzend angeordnet sind; und/oder
der erste Kühler (34) und der zweite Kühler (46) baulich im selben Kühlmodul (34, 40, 46) umfasst sind.

4. Vorrichtung (10) nach einem der vorherigen Ansprüche, wobei:
der erste Kühler (34) ein Hochtemperatur-Kühler ist, der vorzugsweise dazu ausgebildet ist, im Normalbetrieb ein Kühlmittel von rund 110°C auf rund 100°C abzukühlen; und/oder
der zweite Kühler (46) ein Niedrigtemperatur-Kühler ist, der vorzugsweise dazu ausgebildet ist, im Normalbetrieb ein Kühlmittel bis auf einen Temperaturbereich zwischen 5 K und 50 K, bevorzugt bis 25 K, oberhalb von einer Umgebungstemperatur des zweiten Kühlers (46) abzukühlen.

5. Vorrichtung (10) nach einem der vorherigen Ansprüche, wobei:
der Kühlabschnitt-Nebenzweig (16) vom Kühlkreislauf (14) direkt stromabwärts von der Kühlmittelpumpe (30) und/oder direkt stromaufwärts von der zu kühlenden Komponente (36, 38) abzweigt; oder
der Kühlabschnitt-Nebenzweig (16) im ersten Kühler (34) oder in einem Kühlerkasten (40) des ersten Kühlers (34), und vorzugsweise des zweiten Kühlers (46), vom Kühlkreislauf (14) abzweigt.

6. Vorrichtung (10) nach einem der vorherigen Ansprüche, wobei:
der Kühlabschnitt-Nebenzweig (16) einen, vorzugsweise verschließbaren, Bypass (58) am ersten Kühler (34) oder in einem Kühlerkasten (40) des ersten Kühlers (34) und/oder des zweiten Kühlers (46) aufweist, wobei vorzugsweise der Bypass (58) den ersten Kühler (34) direkt mit dem zweiten Kühler (46) verbindet.

7. Vorrichtung (10) nach einem der vorherigen Ansprüche, wobei:
der Kühlabschnitt-Nebenzweig (16) direkt stromabwärts von dem ersten Kühler (34) und/oder direkt stromaufwärts von der Kühlmittelpumpe (30) in den Kühlkreislauf (14) mündet.

8. Vorrichtung (10) nach einem der vorherigen Ansprüche, wobei:
der Kühlabschnitt-Nebenzweig (16) und der Abwärmenutzungskreislaufs (12) hydraulisch getrennt voneinander sind; und/oder
das Arbeitsmittel des Abwärmenutzungskreislaufs (12) indirekt über den Wärmeübertrager (48) von Kühlmittel gekühlt wird, das den ersten Kühler (34) und den zweiten Kühler (46) durchströmt hat.

9. Vorrichtung (10) nach einem der vorherigen Ansprüche, wobei:
der Kühlabschnitt-Nebenzweig (16) eine Durchflussbegrenzungseinrichtung (56) zum Begrenzen, vorzugsweise Anpassen, eines Teilstroms durch den Kühlabschnitt-Nebenzweig (16) aufweist.

10. Vorrichtung (10) nach Anspruch 9, wobei die Durchflussbegrenzungseinrichtung (60) aufweist:
eine Blende; und/oder
eine Ventileinrichtung, vorzugsweise aufweisend ein Druckbegrenzungsventil, ein Steuerventil, ein Regelventil und/oder ein Absperrventil.

11. Vorrichtung (10) nach Anspruch 9 oder Anspruch 10, wobei:
die Durchflussbegrenzungseinrichtung (60) in einer Leitung des Kühlabschnitt-Nebenzweigs (16) angeordnet ist; oder
die Durchflussbegrenzungseinrichtung (60) in einem Kühlerkasten (40) des ersten Kühlers (34) und/oder des zweiten Kühlers (46) angeordnet ist; oder
die Durchflussbegrenzungseinrichtung (60) in einem Bypass, der den ersten Kühler (34) direkt mit dem zweiten Kühler (46) verbindet, angeordnet ist.

12. Vorrichtung (10) nach einem der vorherigen Ansprüche, wobei:
der Kühlabschnitt-Nebenzweig (16) ferner eine weitere Kühlmittelpumpe (60) aufweist, die vorzugsweise unabhängig von der Kühlmittelpumpe (30) des Kühlkreislaufs (14) steuerbar ist.

13. Vorrichtung (10) nach einem der vorherigen Ansprüche, wobei:
der Abwärmenutzungskreislauf (12) einen Kondensator (26), eine Arbeitsmittelpumpe (20), einen Verdampfer (22) und eine Expansionsmaschine (24) aufweist.

14. Vorrichtung (10) nach einem der vorherigen Ansprüche, wobei:
die Abwärmequelle (28) eine Brennstoffzelle und/oder eine Brennkraftmaschine ist.

15. Kraftfahrzeug, vorzugsweise Nutzfahrzeug, aufweisend:
die Vorrichtung (10) zur Energierückgewinnung nach einem der vorherigen Ansprüche, wobei vorzugsweise:
der erste Kühler (34) und der zweite Kühler (46) in einem Frontende des Kraftfahrzeugs angeordnet sind; und/oder
der erste Kühler (34) und der zweite Kühler (46) bezüglich einer Querachse des Kraftfahrzeugs, vorzugsweise direkt, nebeneinander angeordnet sind.

## Claims

1. An energy recovery device (10) for a motor vehicle comprising:
a waste heat source (28);
a waste heat utilization circuit (12), preferably a Clausius Rankine waste heat utilization circuit, wherein the waste heat utilization circuit (12) is configured to convert waste heat from the waste heat source (28) to mechanical energy;
a cooling circuit (14) which comprises a coolant pump (30) and a first cooler (34) and in which a component (36, 38) to be cooled, preferably a drive device, is integrated; and
a cooling section branch (16) which branches off from the cooling circuit (14), the cooling section branch (16) comprising a second cooler (46) and, directly downstream of the second cooler (46), a heat exchanger (48) which is connected in a heat-transferring manner to a working medium of the waste heat utilization circuit (12) for cooling the working medium, **characterized in that**
the first cooler (34) and the second cooler (46) are hydraulically and thermally separated from one another by a partition wall (54); and
the first cooler (34) and the second cooler (46) are accommodated in a common cooler box (40).

2. The device (10) according to claim 1, wherein:
the first cooler (34) and/or second cooler (46) is air-cooled, preferably ambient air-cooled, airstream-cooled and/or fan-cooled.

3. The device (10) according to claim 1 or claim 2, wherein:
the first cooler (34) and the second cooler (46) are arranged adjacent to each other; and/or
the first cooler (34) and the second cooler (46) are structurally included in the same cooling module (34, 40, 46).

4. The device (10) according to one of the preceding claims, wherein:
the first cooler (34) is a high-temperature cooler which is preferably configured to cool down a coolant from about 110°C to about 100°C during normal operation; and/or
the second cooler (46) is a low-temperature cooler which is preferably configured to cool a coolant in normal operation to a temperature range between 5 K and 50 K, preferably up to 25 K, above an ambient temperature of the second cooler (46).

5. The device (10) according to one of the preceding claims, wherein:
the cooling section branch (16) branches off from the cooling circuit (14) directly downstream of the coolant pump (30) and/or directly upstream of the component (36, 38) to be cooled; or
the cooling section branch (16) branches off from the cooling circuit (14) in the first cooler (34) or in a cooler box (40) of the first cooler (34), and preferably of the second cooler (46).

6. The device (10) according to one of the preceding claims, wherein:
the cooling section branch (16) comprises a, preferably closable, bypass (58) at the first cooler (34) or in a cooler box (40) of the first cooler (34) and/or the second cooler (46), wherein preferably the bypass (58) connects the first cooler (34) directly to the second cooler (46).

7. The device (10) according to one of the preceding claims, wherein:
the cooling section branch (16) opens into the cooling circuit (14) directly downstream of the first cooler (34) and/or directly upstream of the coolant pump (30).

8. The device (10) according to one of the preceding claims, wherein:
the cooling section branch (16) and the waste heat utilization circuit (12) are hydraulically separated from each other; and/or
the working fluid of the waste heat utilization circuit (12) is cooled indirectly via the heat exchanger (48) by coolant that has flowed through the first cooler (34) and the second cooler (46).

9. The device (10) according to any one of the preceding claims, wherein:
the cooling section branch (16) comprises a flow limiting device (56) for limiting, preferably adjusting, a partial flow through the cooling section branch (16).

10. The device (10) according to claim 9, wherein the flow limiting device (60) comprises:
an orifice; and/or
a valve device, preferably comprising a pressure relief valve, a control valve, a regulating valve and/or a shut-off valve.

11. The device (10) according to claim 9 or claim 10, wherein:
the flow limiting device (60) is arranged in a conduit of the cooling section branch (16); or
the flow limiting device (60) is arranged in a cooler box (40) of the first cooler (34) and/or the second cooler (46); or
the flow limiting device (60) is arranged in a bypass which connects the first cooler (34) directly to the second cooler (46).

12. The device (10) according to any one of the preceding claims, wherein:
the cooling section branch (16) further comprises a further coolant pump (60), which is preferably controllable independently of the coolant pump (30) of the cooling circuit (14).

13. The device (10) according to any one of the preceding claims, wherein:
the waste heat utilization circuit (12) comprises a condenser (26), a working fluid pump (20), an evaporator (22) and an expansion machine (24).

14. The device (10) according to any one of the preceding claims, wherein:
the waste heat source (28) is a fuel cell and/or an internal combustion engine.

15. A motor vehicle, preferably commercial vehicle, comprising:
the energy recovery device (10) according to any one of the preceding claims, wherein preferably:
the first cooler (34) and the second cooler (46) are arranged in a front end of the motor vehicle; and/or
the first cooler (34) and the second cooler (46) are arranged next to each other, preferably directly, with respect to a transverse axis of the motor vehicle.

## Revendications

1. Dispositif (10) de récupération d'énergie pour un véhicule automobile, présentant :
une source de chaleur perdue (28) ;
un circuit d'utilisation de chaleur perdue (12), de préférence un circuit d'utilisation de chaleur perdue Clausius-Rankine, le circuit d'utilisation de chaleur perdue (12) étant configuré pour convertir la chaleur perdue de la source de chaleur perdue (28) en travail mécanique ;
un circuit de refroidissement (14) qui présente une pompe à réfrigérant (30) et un premier refroidisseur (34) et dans lequel est incorporé un composant à refroidir (36, 38), de préférence un appareil d'entraînement ; et
une branche secondaire de section de refroidissement (16) qui part du circuit de refroidissement (14), la branche secondaire de section de refroidissement (16) présentant un deuxième refroidisseur (46) et, directement en aval du deuxième refroidisseur (46), un échangeur de chaleur (48), qui est relié par transfert de chaleur à un fluide de travail du circuit d'utilisation de chaleur perdue (12) pour refroidir le fluide de travail, **caractérisé en ce que**
le premier refroidisseur (34) et le deuxième refroidisseur (46) sont séparés hydrauliquement et thermiquement l'un de l'autre par une paroi de séparation (54) ; et
le premier refroidisseur (34) et le deuxième refroidisseur (46) sont logés dans un caisson de refroidisseur commun (40).

2. Dispositif (10) selon la revendication 1, dans lequel :
le premier refroidisseur (34) et/ou le deuxième refroidisseur (46) est refroidi à l'air, de préférence refroidi à l'air ambiant, refroidi au vent de circulation et/ou refroidi par ventilateur.

3. Dispositif (10) selon la revendication 1 ou la revendication 2, dans lequel :
le premier refroidisseur (34) et le deuxième refroidisseur (46) sont agencés de manière adjacente l'un à l'autre ; et/ou
le premier refroidisseur (34) et le deuxième refroidisseur (46) sont compris structurellement dans le même module de refroidissement (34, 40, 46).

4. Dispositif (10) selon l'une quelconque des revendications précédentes, dans lequel :
le premier refroidisseur (34) est un refroidisseur à haute température, de préférence configuré pour, en fonctionnement normal, refroidir un réfrigérant d'environ 110 °C à environ 100 °C ; et/ou
le deuxième refroidisseur (46) est un refroidisseur à basse température, de préférence configuré pour, en fonctionnement normal, refroidir un réfrigérant jusqu'à une plage de température comprise entre 5 K et 50 K, de préférence jusqu'à 25 K, au-dessus d'une température ambiante du deuxième refroidisseur (46).

5. Dispositif (10) selon l'une quelconque des revendications précédentes, dans lequel :
la branche secondaire de section de refroidissement (16) part du circuit de refroidissement (14) directement en aval de la pompe à réfrigérant (30) et/ou directement en amont du composant à refroidir (36, 38) ; ou
la branche secondaire de section de refroidissement (16) part du circuit de refroidissement (14) dans le premier refroidisseur (34) ou dans un caisson de refroidisseur (40) du premier refroidisseur (34), et de préférence du deuxième refroidisseur (46).

6. Dispositif (10) selon l'une quelconque des revendications précédentes, dans lequel :
la branche secondaire de section de refroidissement (16) présente une dérivation (58), de préférence obturable, au niveau du premier refroidisseur (34) ou dans un caisson de refroidisseur (40) du premier refroidisseur (34) et/ou du deuxième refroidisseur (46), la dérivation (58) reliant de préférence directement le premier refroidisseur (34) au deuxième refroidisseur (46) .

7. Dispositif (10) selon l'une quelconque des revendications précédentes, dans lequel :
la branche secondaire de section de refroidissement (16) débouche dans le circuit de refroidissement (14) directement en aval du premier refroidisseur (34) et/ou directement en amont de la pompe à réfrigérant (30).

8. Dispositif (10) selon l'une quelconque des revendications précédentes, dans lequel :
la branche secondaire de section de refroidissement (16) et le circuit d'utilisation de chaleur perdue (12) sont hydrauliquement séparés l'un de l'autre ; et/ou
le fluide de travail du circuit d'utilisation de chaleur perdue (12) est refroidi indirectement par l'intermédiaire de l'échangeur de chaleur (48) par le réfrigérant qui a traversé le premier refroidisseur (34) et le deuxième refroidisseur (46).

9. Dispositif (10) selon l'une quelconque des revendications précédentes, dans lequel :
la branche secondaire de section de refroidissement (16) présente un appareil de limitation de débit (56) pour limiter, de préférence ajuster, un écoulement partiel à travers la branche secondaire de section de refroidissement (16).

10. Dispositif (10) selon la revendication 9, dans lequel l'appareil de limitation de débit (60) présente :
un diaphragme ; et/ou
un appareil à soupape, présentant de préférence une soupape de limitation de pression, une soupape de commande, une soupape de régulation et/ou une soupape d'arrêt.

11. Dispositif (10) selon la revendication 9 ou la revendication 10, dans lequel :
l'appareil de limitation de débit (60) est agencé dans une conduite de la branche secondaire de section de refroidissement (16) ; ou
l'appareil de limitation de débit (60) est agencé dans un caisson de refroidisseur (40) du premier refroidisseur (34) et/ou du deuxième refroidisseur (46) ; ou
l'appareil de limitation de débit (60) est agencé dans une dérivation qui relie directement le premier refroidisseur (34) au deuxième refroidisseur (46).

12. Dispositif (10) selon l'une quelconque des revendications précédentes, dans lequel :
la branche secondaire de section de refroidissement (16) présente en outre une autre pompe à réfrigérant (60), qui peut de préférence être commandée indépendamment de la pompe à réfrigérant (30) du circuit de refroidissement (14).

13. Dispositif (10) selon l'une quelconque des revendications précédentes, dans lequel :
le circuit d'utilisation de chaleur perdue (12) présente un condenseur (26), une pompe à fluide de travail (20), un évaporateur (22) et une machine de détente (24).

14. Dispositif (10) selon l'une quelconque des revendications précédentes, dans lequel :
la source de chaleur perdue (28) est une pile à combustible et/ou un moteur à combustion interne.

15. Véhicule automobile, de préférence véhicule utilitaire, présentant :
le dispositif (10) de récupération d'énergie selon l'une quelconque des revendications précédentes, dans lequel, de préférence :
le premier refroidisseur (34) et le deuxième refroidisseur (46) sont agencés dans une extrémité avant du véhicule automobile ; et/ou
le premier refroidisseur (34) et le deuxième refroidisseur (46) sont agencés côte à côte, de préférence directement, par rapport à un axe transversal du véhicule automobile.
